# EUROPEAN PATENT APPLICATION

(11) **EP 4 002 347 A1**
(43) Date of publication of application: **25.05.2022**
(21) Application number: 21176751.2
(22) Date of filing: 28.05.2021
(51) Int. Cl.: G09G 5/10, G06F 3/14, G09G 3/20

(54) **METHOD AND APPARATUS FOR ADJUSTING BRIGHTNESS, DISPLAY DEVICE, AND STORAGE MEDIUM**

(30) Priority: 17.11.2020 CN 202011285536
(71) Applicant: Beijing Xiaomi Mobile Software Co., Ltd., Beijing 100085 (CN)
(72) Inventor: Liu, Lijun, Beijing, 100085 (CN); Jia, Yongqiang, Beijing, 100085 (CN)
(74) Representative: Gunzelmann, Rainer

(57) **Abstract**

A method and apparatus for adjusting brightness, a display device, and a storage medium are provided. The method is applied to a first display device and includes the following operations. A brightness adjustment requirement for a second display device is obtained in a case of being in a connected state with the second display device. A brightness value of a display picture displayed on the second display device is adjusted based on the brightness adjustment requirement to acquire a display data after the display picture of the second display device is adjusted; the adjusted display data is transmitted to the second display device.

## Description

### TECHNICAL FIELD

The present disclosure relates to the field of display technologies of a displayer, and particularly, to a method and apparatus for adjusting brightness, a display device, and a storage medium.

### BACKGROUND

Currently, expanded screen display technologies are increasingly used in commercial office environments or home. However, when an expanded screen is connected to an integrated computer or a laptop or the integrated computer or the laptop is connected to be an expanded screen for displaying, since the display performances and the like of the two devices are often different from each other, there is a large visual difference for the same display picture displayed on the two devices. In the related art, in order to adapt the expanded screen for the current display content and protect the visual experience of the user, the backlight brightness of the expanded screen is often manually adjusted, so that the user can better view the display content of the current expanded screen. However, when the expanded screen is no longer used as the expanded screen, or the expanded screen is no longer connected to the current device to be the expanded screen of the current device to display the current display content, the user needs to adjust the original backlight brightness of the expanded screen back, which is disadvantageous for the usage experience of user. Therefore, how to ensure both the visual experience of the expanded screen and the usage experience of the expanded screen becomes an urgent technical problem to be solved.

### SUMMARY

The present disclosure provides a method and an apparatus for processing projection, a display device, and a storage medium. The technical solutions are as follows.

According to a first aspect of embodiments of the present disclosure, a method for adjusting brightness is provided. The method is performed by a first display device. The method includes the following operations.

In a case of being in a connected state with a second display device, a brightness adjustment requirement for the second display device is obtained.

A brightness value of a display picture displayed on the second display device is adjusted based on the brightness adjustment requirement to acquire display data of the adjusted display picture of the second display device.

The display data of the adjusted display picture is transmitted to the second display device.

Optionally, the display picture of the second display device includes a first display content and a second display content. The first display content is a display content associated with a display content of the first display device, and the second display content is a display content not associated with the display content of the first display device.

The operation that the brightness value of the display picture displayed on the second display device is adjusted based on the brightness adjustment requirement includes the following operation.

In the case where a brightness value of the second display content is maintained, a brightness value of the first display content displayed on the second display device is adjusted based on the brightness adjustment requirement.

Optionally, the operation that the brightness value of the first display content displayed on the second display device is adjusted based on the brightness adjustment requirement includes the following operation.

When a display picture of the first display device is projected onto the second display device, a brightness value of the display picture of the first display device is adjusted based on the brightness adjustment requirement.

Optionally, the operation that the brightness value of the display picture of the first display device is adjusted based on the brightness adjustment requirement includes the following operation.

The brightness value of the display picture of the first display device is adjusted based on the brightness adjustment requirement by adjusting a gray value of an application page of an application program being displayed on the first display device.

Optionally, the operation that the brightness value of the display picture of the first display device is adjusted based on the brightness adjustment requirement includes the following operations.

A mask layer that changes the display picture of the first display device is created according to the brightness adjustment requirement.

The mask layer is overlaid on the display picture of the first display device to acquire a display picture of the first display device after the gray value is adjusted.

Optionally, the operation that the mask layer that changes the display picture of the first display device is created according to the brightness adjustment requirement includes the following operation.

A gray mask layer corresponding to the brightness adjustment requirement is created according to the brightness adjustment requirement.

Optionally, a translucent mask layer corresponding to the brightness adjustment requirement is created according to the brightness adjustment requirement.

According to a second aspect of embodiments of the present disclosure, a method for adjusting brightness is provided. The method is applied to a second display device. The method includes the following operations.

In a case of being in a connected state with a first display device, a brightness adjustment requirement for the second display device is determined.

The brightness adjustment requirement is transmitted to the first display device.

Display data of an adjusted display picture of the second display device that is acquired by adjusting, by the first display device based on the brightness adjustment requirement, a brightness value of a display picture displayed on the second display device is received.

The display picture after the brightness is adjusted of the second display device is displayed based on the display data.

Optionally, the display picture of the second display device comprises a first display content and a second display content. The first display content is a display content associated with a display content of the first display device, and the second display content is a display content not associated with the display content of the first display device.

The operation that the display data of the adjusted display picture of the second display device that is acquired by the first display device based on the brightness adjustment requirement is received includes the following operation.

In the case where a brightness value of the second display content is maintained, a display data that is acquired by adjusting, by the first display device, a brightness value of the first display content of the second display device based on the brightness adjustment requirement is received.

Optionally, the operation that the display data that is acquired by adjusting the brightness value of the first display content of the second display device by the first display device based on the brightness adjustment requirement is received includes the following operation.

When a display picture of the first display device is projected onto the second display device, a display data that is acquired by adjusting, by the first display device, the brightness value of the display picture of the first display device based on the brightness adjustment requirement is received.

Optionally, the operation that the display data that is acquired by adjusting, by the first display device, the brightness value of the display picture of the first display device based on the brightness adjustment requirement is received includes the following operation.

Display data of the display picture of the first display device after a gray value is adjusted, which is acquired by overlaying a mask layer on the display picture of the first display device by the first display device is received. The mask layer is created by the first display device based on the brightness adjustment requirement.

Optionally, the operation that the brightness adjustment requirement for the second display device is determined includes the following operations.

A touch operation of a preset area on the second display device is detected.

The brightness adjustment requirement for the second display device is determined based on the touch operation.

According to a third aspect of embodiments of the present disclosure, an apparatus for adjusting brightness is provided. The apparatus is applied to a first display device. The apparatus includes an obtaining module, an adjustment module and a first sending module.

The obtaining module is configured to obtain a brightness adjustment requirement for the second display device in a case of being in a connected state with a second display device.

The adjustment module is configured to adjust, based on the brightness adjustment requirement, a brightness value of a display picture displayed on the second display device to acquire display data of the adjusted display picture of the second display device.

The first transmitting module is configured to transmit the display data of the adjusted display picture to the second display device.

Optionally, the display picture of the second display device includes a first display content and a second display content. The first display content is a display content associated with a display content of the first display device, and the second display content is an amount display content not associated with the display content of the first display device.

The adjustment module is further configured to: in the case where a brightness value of the second display content is maintained, adjust, based on the brightness adjustment requirement, a brightness value of the first display content displayed on the second display device.

Optionally, the second display device is in the connected state, and the adjustment module is further configured to: when a display picture of the first display device is projected onto the second display device, adjust a brightness value of the display picture of the first display device based on the brightness adjustment requirement.

Optionally, the adjustment module is specifically configured to: adjust, based on the brightness adjustment requirement, the brightness value of the display picture of the first display device by adjusting a gray value of an application page of an application program being displayed on the first display device.

Optionally, the adjustment module further includes a creation sub-module and an overlaying sub-module.

The creation sub-module is configured to create, according to the brightness adjustment requirement, a mask layer that changes the display picture of the first display device.

The overlaying sub-module is configured to overlay the mask layer on the display picture of the first display device to acquire a display picture of the first display device after the gray value is adjusted.

Optionally, the creation sub-module is further configured to: create, according to the brightness adjustment requirement, a gray mask layer corresponding to the brightness adjustment requirement; and/or, create, according to the brightness adjustment requirement, a translucent mask layer corresponding to the brightness adjustment requirement.

According to a fourth aspect of embodiments of the present disclosure, an apparatus for adjusting brightness is provided. The apparatus is applied to a second display device. The apparatus includes a determining module, a second transmitting module, a receiving module and a display module.

The determining module is configured to determine a brightness adjustment requirement for the second display device in a case of being in a connected state with a first display device.

The second transmitting module is configured to transmit the brightness adjustment requirement to the first display device.

The receiving module is configured to receive display data of an adjusted display picture of the second display device that is acquired by adjusting, based on the brightness adjustment requirement, a brightness value of a display picture displayed on the second display device by the first display device.

The display module is configured to display, based on the display data, the display picture after the brightness is adjusted of the second display device.

Optionally, the display picture of the second display device includes first display content and second display content. The first display content is a display content associated with a display content of the first display device, and the second display content is a display content not associated with the display content of the first display device.

The receiving module is further configured to: in the case where a brightness value of the second display content is maintained, receive a display data that is acquired by adjusting, by the first display device, a brightness value of the first display content of the second display device based on the brightness adjustment requirement.

Optionally, the receiving module is specifically configured to: when a display picture of the first display device is projected onto the second display device, receive display data that is acquired by adjusting, by the first display device, the brightness value of the display picture of the first display device based on the brightness adjustment requirement.

Optionally, the receiving module is further configured to: receive display data that is acquired by adjusting, by the first display device, a gray value of an application page of an application program being displayed on the first display device based on the brightness adjustment requirement.

Optionally, the receiving module is specifically configured to: receive display data after a gray value of the display picture of the first display device is adjusted, which is acquired by overlaying a mask layer on the display picture of the first display device by the first display device, wherein the mask layer is created by the first display device based on the brightness adjustment requirement.

Optionally, the determining module further includes a detection sub-module and a determination sub-module.

The detection sub-module is configured to detect a touch operation of a preset area on the second display device.

The determination sub-module is configured to determine the brightness adjustment requirement for the second display device based on the touch operation.

According to a fifth aspect of embodiments of the present disclosure, a display device is provided. The display device includes a processor and a memory for storing instructions executable for the processor.

When the executable instructions are executed, the processor is configured to implement any one of the above method for adjusting brightness applied to the first display device or any one of the above method for adjusting brightness applied to the second display device.

According to a sixth aspect of the embodiments of the present disclosure, a non-transitory computer readable storage medium on which a computer program is stored is provides. When instructions in the storage medium are executed by a processor of a display device, the display device performs any one of the above method steps for adjusting brightness applied to the first display device, or performs any one of the above method for adjusting brightness applied to the second display device.

The technical solutions provided by the embodiments of the present disclosure may include the following advantages.

In embodiments of the present disclosure, the method is applied to the first display device and includes the following operations. In a case of being in a connected state with the second display device, a brightness adjustment requirement for a second display device is obtained. A brightness value of a display picture displayed on the second display device is adjusted based on the brightness adjustment requirement to acquire display data of the adjusted display picture of the second display device. The display data of the adjusted display picture is transmitted to the second display device. In this way, firstly, by adjusting the brightness value of the display picture of the second display device by the first display device, the viewing experience of the display picture of the second display device for the user can be improved, and the visual difference caused by the difference of the display effects for displaying a same content on the two display devices can be reduced. Next, since the brightness value of the display picture of the second display device is adjusted instead of adjusting the backlight brightness of the second display device, the second display device may maintain its own display parameters in the case where the second display device does not display the display data transmitted by the first display device while the second display device is not connected to the first display device, so that the second display device displays its own display data. In comparison with the related art, when the second display device recovers from the extended display device of the first display device to its own display device, a user needs to manually adjust the original display parameters of the second display device back, such as the brightness of the second display device. In the embodiments of the present disclosure, since the display parameters of the second display device are not adjusted in any way, the brightness value of the display picture of the second display device is adjusted by the first display device, and the adjusted display data is also transmitted from the first display device, the manual adjustment operations for adjusting the display parameters of the second display device in order to adapt to the current display picture may be reduced when the second display device recovers from the extended device of the first display device to its own display device, for example, recovering to the original brightness display of the second display device, or changing from the extended device of the first display device to the extended device of the other display device. According to the present embodiments, the first display device can adjust brightness value of the display picture of the second display device to satisfy the visual experience of the display effect of the second display device and improve the usage experience of the second display device.

Therefore, in the embodiments of the present disclosure, by adjusting, by the first display device, the brightness value of the display picture displayed on the second display device based on the brightness adjustment requirement of the second display device, the second display device does not need to adjust any display parameters at the physical level to satisfy the visual experience on the second display device while reducing the adjusting operations on the display parameters of the second display device at the physical level. Therefore, both the visual experience and the usage experience on the second display device are satisfied.

It is to be understood that the above general description and the following detailed description are exemplary and explanatory only and are not restrictive of the disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the disclosure.
FIG. 1 is a flowchart of a method for adjusting brightness according to exemplary embodiments.
FIG. 2 is a schematic diagram of a scenario of a method for adjusting brightness according to exemplary embodiments.
FIG. 3 is another flowchart of a method for adjusting brightness according to exemplary embodiments.
FIG. 4 is another flowchart of a method for adjusting brightness according to exemplary embodiments.
FIG. 5 is a flowchart of a method for adjusting brightness according to specific exemplary embodiments.
FIG. 6 is a block diagram of an apparatus for adjusting brightness according to exemplary embodiments.
FIG. 7 is another block diagram of an apparatus for adjusting brightness according to exemplary embodiments.
FIG. 8 is a block diagram of a display device according to exemplary embodiments.

### DETAILED DESCRIPTION

Exemplary embodiments will be described in detail herein, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

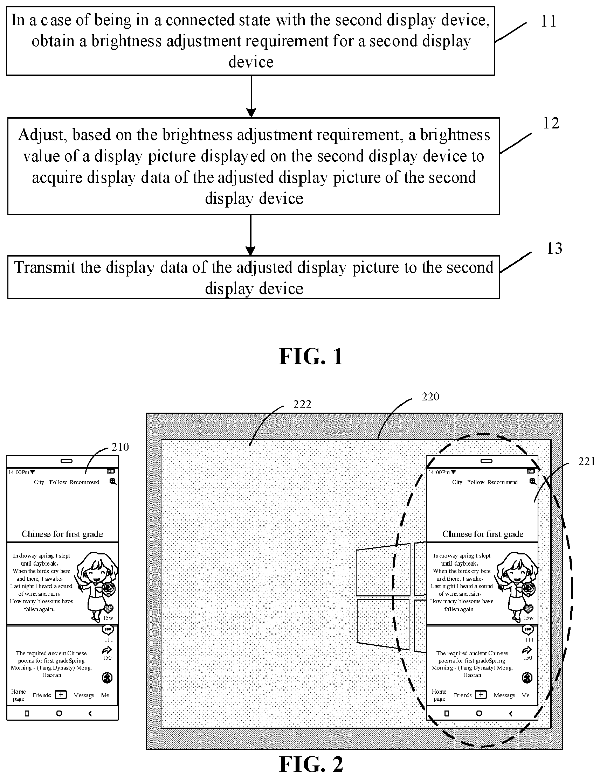

FIG. 1 is a flowchart of a method for adjusting brightness according to an exemplary embodiment. The method is applied to a first display device, as shown in FIG. 1, and the method includes the following operations.

In operation 101, in a case of being in a connected state with the second display device, a brightness adjustment requirement for a second display device is obtained.

Herein, the display device may be a terminal device having a display function. Herein, the terminal device may be a mobile terminal, a desktop computer, a smart home device, or the like. The mobile terminal may be a mobile phone, a tablet computer, or laptop. The smart home device may be a television or the like.

In some embodiments, the first display device and the second display device belong to the same terminal device, and the second display device may be an extended display device of the first display device, for example, the first display device and the second display device may be a front display device and a back display device of the mobile terminal, respectively, or a front display device and a side display device of the mobile terminal, respectively, or two display devices foldable in the mobile terminal.

In other embodiments, the first display device and the second display device belong to different terminal devices, and the second display device may also be an extended display device of the first display device. For example, the first display device may be a mobile phone, and the second display device may be a desktop computer or a smart television in order to facilitate a user to view display content of the mobile phone on a large screen.

In summary, in embodiments of the present disclosure, the second display device may be used as an extended display device of the first display device to assist the first display device in displaying so that the display content may be better viewed by a user.

The extended display device herein may be a display device capable of expanding a larger display area on the basis of the display screen of the first display device.

In one embodiment, the display content of the second display device may be the same as or different from the content currently displayed by the first display device.

In another embodiment, when the display content of the second display device is different from the content currently displayed by the first display device, it may be associated with the content displayed by the first display device or it may be not associated with the content displayed by the first display device. For example, when the display content of the second display device is associated with the content displayed by the first display device, the display contents of the first display device and the second display device may be different application interfaces displaying the same application program. When the display content of the second display device is not associated with the content displayed by the first display device, the display contents of the first display device and the second display device may be application interfaces of different application programs.

Herein, the first display device and the second display device are in a connected state, which means that the first display device and the second display device are connected in a wired communication mode or a wireless communication mode. Herein, the wired communication mode may be, for example, but not limited to, power line communication, optical cable power line communication, Internet, cable coaxial, or telephone line. The wireless communication mode may be, for example, but not limited to, infrared, Bluetooth, Zwave, NFC, ZigBee, or WiFi.

It should be added that, since the display performances of the two display devices are different, there is a difference in viewing experience of the same picture. That is, a certain display picture is adapted to be displayed on the first display device, but may not be adapted to be displayed on the second display device. In this way, when a display picture is transmitted from one display device to another display device for display, in order to achieve a more comfortable display effect, it is often needed to adjust the display parameters of the display device used for current display, especially adjusting the brightness value to make the second display device have a better display effect and viewing experience.

In the present embodiments, the operation that brightness adjustment requirement for the second display device is obtained means that the initiated brightness adjustment requirement when the picture displayed on the second display device requires brightness adjustment is obtained. It should be noted that the brightness adjustment requirement may be generated by the second display device based on triggering of the brightness adjustment, for example, the brightness adjustment requirement may be triggered and determined based on an adjustment operation for the second display device. Of course, in other embodiments, the brightness adjustment requirement may be triggered by the user on the first display device for the current viewing experience of the second display device, for example, the brightness adjustment operation may be triggered and determined based on the adjustment operation for the first display device.

It should be understood that, no matter whether it is initiated directly by the first display device or is transmitted to the first display device after the second display device initiates, it may be triggered based on the user's operation of the brightness control, or triggered by the user's voice control.

In operation 102, a brightness value of a display picture displayed on the second display device is adjusted based on the brightness adjustment requirement to acquire display data of the adjusted display picture of the second display device.

Herein, the display picture refers to image content displayed on the second display device. The operation that the brightness value of the display picture displayed on the second display device is adjusted may include the following operation. The image brightness value of the display picture displayed on the second display device is adjusted. Specifically, it may include the operation that the brightness of the image pixels of the display picture displayed on the second display device is adjusted. It should be understood that the brightness value herein refers to the brightness in digital imaging, rather than the brightness in physics, i.e., the brightness value is not the brightness of physical screen of the second display device.

In operation 103, the display data of the adjusted display picture is transmitted to the second display device.

It should be understood that, in the embodiments of the present disclosure, the first display device is an execution body for adjusting brightness, and brightness value adjustment is performed on a display picture of the second display device and the display data of the adjusted display picture of the second display device is acquired. The display data is transmitted to the second display device for the second display device to display a display picture of the second display device after being adjusted. In this way, when the first display device and the second display device are in the connected state, the brightness value of the display picture of the second display device may be adjusted by the first display device, and the adjusted display data is provided for the second display device to be displayed, so that the brightness adjustment of the second display device is implemented visually, but the original brightness value of the second display device is actually maintained, thereby ensuring that the brightness of the second display device does not need to be re-adjusted back by the user when the second display device is not an extended device, thereby reducing the operation of the user and improving the user experience.

According to the above embodiments, by adjusting the brightness value of the display picture of the second display device by the first display device, the viewing experience of the user for the display picture of the second display device can be improved, and the visual difference caused by the difference of the display effects for displaying the same content on the two display devices can be reduced. In addition, since the brightness value of the display picture of the second display device is adjusted instead of adjusting the brightness value of the second display device, the second display device may maintain its own display parameters in the case where the second display device does not display the display data transmitted by the first display device while the second display device is not connected to the first display device, so that the second display device displays its own display data.

In comparison with the related art, when the second display device recovers from the extended display device of the first display device to its own display device, display parameters of the second display device, such as brightness of the second display device, can be maintained. In the embodiments of the present disclosure, since the display parameters of the second display device are not adjusted in any way, the brightness value of the display picture of the second display device is adjusted by the first display device, and the adjusted display data is also transmitted from the first display device, the manual adjustment operations for adjusting the display parameters of the second display device in order to adapt to the current display picture can be reduced when the second display device recovers from the extended device of the first display device to its own display device, for example, recovering to the original brightness display of the second display device, or changing from the extended device of the first display device to the extended device of the other display device. According to the present embodiments, the first display device can adjust brightness value of the display picture of the second display device to satisfy the visual experience of the display effect of the second display device and improve the usage experience of the second display device. Thus, by adjusting the brightness value of the display picture displayed on the second display device by the first display device, the second display device does not need to adjust any display parameters at the physical level to satisfy the visual experience on the second display device while reducing the adjusting operations on the display parameters of the second display device at the physical level Therefore, both the visual experience and the usage experience on the second display device are satisfied .

In some cases, the second display device, as the extended device of the first display device, typically requires only a part of the area of the second display device as a supplementary display of the first display device. That is, in the case where the display is extended by the second display device, the display content of the first display device is normally displayed in a part of the area of the second display device, while the display content of the second display device itself, such as a desktop background, is displayed in another part of the area. If the brightness values are adjusted for all the display pictures of the second display device, the display is unfavorable to the user's viewing experience of the part of the area displaying its own display content of the second display device, and the amount of data to be adjusted is increased.

Based on this, as another alternative embodiment, the display picture of the second display device includes a first display content and a second display content. The first display content is display content associated with a display content of the first display device, and the second display content is display content not associated with the display content of the first display device.

The operation that the brightness value of the display picture displayed on the second display device is adjusted based on the brightness adjustment requirement includes the following operation.

In the case where a brightness value of the second display content is maintained, a brightness value of the first display content displayed on the second display device is adjusted based on the brightness adjustment requirement.

Herein, the display content associated with the first display content of the first display device may include the continuation display content of the first display content or the mirror display content of the first display content.

In the embodiments of the present disclosure, since the brightness value of the second display content is maintained, and the brightness value of the first display content displayed on the second display device is adjusted, the adjustment of the display picture of the second display device may be accurate to the display content associated with the display content of the first display device, and the unassociated display content may still be displayed according to the original display parameters. In this way, the user's viewing experience of the display content on the second display device that is not associated with the first display device may be enhanced, and it is not necessary to adjust the entire display picture of the second display device, so that the adjusted content is more accurate, the amount of data to be processed is reduced, and the processing speed is improved.

As another alternative embodiment, the operation 102, i.e., the operation that the brightness value of the first display content displayed on the second display device is adjusted based on the brightness adjustment requirement may include the following operation.

When a display picture of the first display device is projected onto the second display device, a brightness value of the display picture of the first display device is adjusted based on the brightness adjustment requirement.

In some cases, the display picture of the first display device can be projected onto the second display device, so that the display content of the first display device is in a projection state on the second display device.

According to the embodiments of the present disclosure, the brightness value of the display picture of the first display device is adjusted, so that adjustment of the first display content in the second display device can be implemented, thereby implementing the accurate adjustment of the first display content in the second display device.

Specifically, referring to FIG. 2, FIG. 2 is a schematic diagram of a scenario of a method for adjusting brightness according to an exemplary embodiment. As shown in FIG. 2, a display picture 210 of the first display device is projected onto a display picture 220 of the second display device. Herein, the display picture 220 of the second display device may include the first display content 221 and the second display content 222. In the present embodiments, since the display content of the first display device is projected onto the second display device, the adjustment of the first display content 221 of the second display device can be completed by directly adjusting the display picture 210 of the first display device. Therefore, for the second display device, the display of the second display content 222 can be performed by maintaining the original display parameters, thereby reducing adjustment of the display parameters of the second display device. Based on this, when the third display device and the second display device are in the connected state and the display picture of the first display device is projected onto the second display device, the display of the projection content of the third display device is not affected by the adjustment of the display content of the first display device. Thus, the universality that the second display device is used as an extended device of the plurality of display devices is enhanced.

Of course, in other embodiments, when the display picture of the first display device is projected onto the second display device, partial data of the first display device can be displayed on the second display device. That is, the partial picture of the display picture of the first display device is projected onto the second display device, and the method further includes the following operations.

A third display content in the first display device is determined. The third display content is a display content in the first display device projected on the second display device. The operation that the brightness of the first display content displayed on the second display device is adjusted based on the brightness adjustment requirement includes the following operation.

The brightness value of the third display content in the display picture of the first display device is adjusted based on the brightness adjustment requirement.

In the present embodiment, it is not necessary to adjust the brightness value of the entire display picture of the first display device, and only the brightness value of the third display content of the display picture of the first display device needs to be adjusted, so that the adjustment of the display picture of the first display device is more accurate, and the amount of data of the display picture of the first display device needed to be adjusted is reduced, thereby increasing the processing speed.

As another alternative embodiment, the operation that the brightness value of the display picture of the first display device is adjusted based on the brightness adjustment requirement includes the following operation.

The brightness value of the display picture of the first display device is adjusted by adjusting a gray value of an application page of an application program being displayed on the first display device based on the brightness adjustment requirement.

Herein, the gray value refers to the darkness or brightness in a sampled color of each pixel in the data image. Therefore, in the present embodiment, the adjustment of the brightness value of the display picture of the first display device is implemented by directly adjusting the gray value, and the change of the brightness of the display picture can be visually perceived, and the adjustment operation is simple and feasible.

Second, in practice, the brightness values of application pages of different application programs, or of different application pages of the same application program, are different. Thus, the present embodiment may flexibly adjust the brightness value of the display picture of the first display device for different application pages, so that the adjusted brightness value may be more adaptable to the display of the currently displayed application page on the second display device, thereby improving the viewing experience of the user.

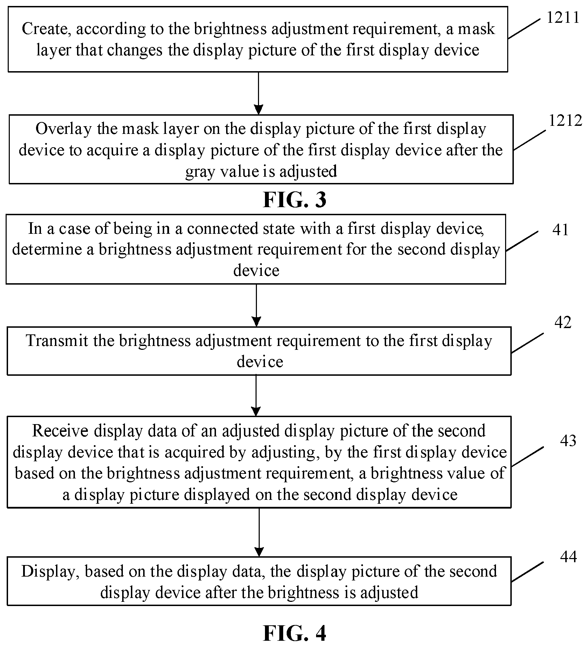

As another alternative embodiment, FIG. 3 is another flowchart of a method for adjusting brightness according to an exemplary embodiment. As shown in FIG. 3, the operation 121, i.e., the operation that the brightness value of the display picture of the first display device is adjusted based on the brightness adjustment requirement includes the following operations.

In operation 1211, a mask layer that changes the display picture of the first display device is created according to the brightness adjustment requirement.

In operation 1212, the mask layer is overlaid on the display picture of the first display device to acquire a display picture of the first display device after the gray value is adjusted.

Herein, the mask layer may be a display window drawn for the first display device. The display window is below the display screen and is above the application page of the application program. The application page of the application program being displayed may be displayed through the display window, so that the user may see the application page of the application program displayed below the mask layer. The transparency or gray value of the mask layer may be controlled. It should be understood that the transparency of the mask layer is higher, the application page of the application program that can be displayed is brighter. On the contrary, the transparency of the mask layer is lower, the application page of the application program that can be displayed is darker. Similarly, the gray value of the mask layer is higher, i.e., the transparency of the mask layer is lower, and the application page of the application program that can be displayed is brighter. On the contrary, the gray value of the mask layer is lower, i.e., the transparency of the mask layer is higher, and the application page of the application program that can be displayed is darker.

It should be understood that the gray value refers to the color depth of the pixel points in black-and-white image, generally ranging from 0 to 255, and gray value of white is 255, and the gray value of black is 0. The image may be grayed, taking the RGB of the image as an example, the graying of the RGB may correspond to a gray value. For example, the RGB (100, 100, 100) represents that the gray value is 100, and the RGB (50, 50, 50) represents that the gray value is 50. Thus, the color of the image may be brightened or darkened by adjusting the gray value of the image.

Furthermore, the color of the pixel point of the color image may be represented by RGBA. A is the alpha channel, i.e., the transparency value. If the alpha channel value of a pixel is 0%, it is completely transparent (i.e., invisible), and a value of 100% means that this is a completely non-transparent pixel. Therefore, if alpha channel value of the pixel is between 0% and 100%, it may be displayed through the background. It should be understood that the alpha channel value is lower, the transparency of the image is higher, and thus the image is brighter, and the alpha channel value is higher, the transparency of the image is lower, and thus the image is darker.

In the present embodiment, by creating the mask layer that can change the display picture of the first display device, the gray value of the display picture of the first display device is adjusted by overlaying the mask layer. Therefore, the gray value of the application interface does not need to be adjusted, that is, the gray value of the application page does not need to be modified from the source of the application program, and the mask layer only needs to be adjusted for different application pages of the application program or different application pages of the same application program, so that the adjustment of the brightness value of the display picture of the first display device is simplified, the user experience is improved, and it can be adapted to all application programs, and the versatility of the device is improved.

In practice, in order to be able to adjust the gray value of the mask layer, the created mask layer that changes the display picture of the first display device may be a gray mask layer, so that the brightness value of the display picture of the first display device may be adjusted by adjusting the gray value of the gray mask layer. Similarly, in order to be able to adjust the transparency of the mask layer, the created mask layer that changes the display picture of the first display device may be a translucent mask layer, so that the brightness value of the display picture of the first display device may be adjusted by adjusting the transparency of the translucent mask layer.

Based on this, as another alternative embodiment, the operation that the mask layer that changes the display picture of the first display device is created according to the brightness adjustment requirement includes the following operations: a gray mask layer corresponding to the brightness adjustment requirement is created according to the brightness adjustment requirement; and/or a translucent mask layer corresponding to the brightness adjustment requirement is created according to the brightness adjustment requirement.

According to the embodiments of the present disclosure, different mask layers are set according to different adjustment modes, and when the brightness value of the display picture of the first display device need to be adjusted, the gray value or the transparency may be simply adjusted based on the type of the mask layer, so that the display picture of the first display device may be adjusted while the display content of the first display device does not need to be adjusted. That is, the application page of the displayed application program does not need to be adjusted, so that flexibility and operability of the adjustment are improved, and user experience is improved.

FIG. 4 is another flowchart of a method for adjusting brightness according to an exemplary embodiment. As shown in FIG. 4, the method is applied to a second display device, and the method includes the following operations.

In operation 41, in a case of being in a connected state with a first display device, a brightness adjustment requirement for the second display device is determined.

In operation 42, the brightness adjustment requirement is transmitted to the first display device.

In operation 43, display data of an adjusted display picture of the second display device that is acquired by adjusting, based on the brightness adjustment requirement the first display device, a brightness value of a display picture displayed on the second display device is received.

In operation 44, the display picture of the second display device after the brightness is adjusted is displayed based on the display data.

It should be added that, since the display performance of the two display devices is different, there is a difference in viewing experience of the same picture. That is, a certain display picture is adapted to be displayed on the first display device, but may not be adapted to be displayed on the second display device. In this way, when a display picture is transmitted from one display device to another display device for display, in order to achieve a more comfortable display effect, it is often needed to adjust the display parameters of the display device used for current display, especially adjusting the brightness value to make the second display device have a better display effect and viewing experience.

In the present embodiment, the brightness value of the second display device is adjusted by the first display device by transmitting the brightness adjustment requirement to the first display device. The viewing experience of the user for the display picture of the second display device is improved, and the visual difference caused by the difference in the display effect of the same display content on the two display devices is reduced.

In some embodiments, the method further includes the following operation.

In a case of being in a connected state with the first display device, the brightness adjustment instruction of the second display device is shielded. The brightness adjustment instruction is generated based on receipt of a corresponding adjustment operation by a brightness adjustment control, or is generated based on voice control of the brightness adjustment.

Optionally, the driving circuit of the second display device for controlling the brightness of the display screen is disconnected in the connected state with the first display device.

In the present embodiment, in the case where the second display device and the first display device are in a connected state, the second display device does not directly adjust its own display brightness according to the brightness adjustment requirement by shielding the brightness adjustment instruction of the second display device and/or disconnecting the driving circuit of the second display device for controlling the brightness of the display screen, so that the second display device may maintain its own display parameters in the case where the second display device does not display the display data transmitted by the first display device while the second display device is not connected to the first display device, so that the second display device displays its own display data.

In comparison with the related art, when the second display device recovers from the extended display device of the first display device to its own display device, a user is required to manually adjust back the original display parameters of the second display device, such as the brightness of the second display device. In the embodiments of the present embodiments, since the display parameters of the second display device are not adjusted in any way, the brightness value of the display picture of the second display device is adjusted by the first display device, and the adjusted display data is also transmitted from the first display device, the manual adjusting operations for adjusting the display parameters of the second display device in order to adapt to the current display picture may be reduced when the second display device recovers from the extended device of the first display device to its own display device, or changes from the extended device of the first display device to the extended device of other display device.

According to the above embodiments, the first display device can adjust brightness value of the display picture of the second display device to satisfy the visual experience of the display effect of the second display device and improve the usage experience of the second display device. Furthermore, both the visual experience and the usage experience on the second display device are satisfied.

As another alternative embodiment, the display picture of the second display device includes a first display content and a second display content. The first display content is a display content associated with a the display content of the first display device, and the second display content is display content not associated with the display content of the first display device.

The operation that the adjusted display data of the display picture of the second display device that is acquired by the first display device based on the brightness adjustment requirement is received includes the following operation.

In the case where a brightness value of the second display content is maintained, a display data that is acquired by adjusting, based on the brightness adjustment requirement, a brightness value of the first display content of the second display device by the first display device is received.

In the embodiments of the present disclosure, since the brightness value of the second display content is maintained, and the brightness value of the first display content displayed on the second display device is adjusted, the adjustment of the display picture of the second display device may be accurate to the display content associated with the display content of the first display device, and the unassociated display content may still be displayed according to the original display parameters. In this way, the user's viewing experience of the display content on the second display device that is not associated with the first display device may be enhanced, and it is not necessary to adjust the entire display picture of the second display device, so that the adjusted content is more accurate, the amount of data to be processed is reduced, and the processing speed is improved.

As another alternative embodiment, the second display device being in the connected state with a first display device, includes that: the second display device is in the connected state with a first display device and the display picture of the first display device is projected onto the second display device.

The operation that the display data that is acquired by adjusting, based on the brightness adjustment requirement, the brightness value of the display picture of the second display device by the first display device is received includes the following operation.

A display data that is acquired by adjusting, based on the brightness adjustment requirement, a brightness value of the display picture of the first display device by the first display device is received.

According to the embodiments in the present disclosure, adjustment of the first display content in the second display device can be implemented by adjusting the brightness value of the display picture of the first display device, so that accurate adjustment of the first display content in the second display device can be implemented.

As another alternative embodiment, the operation that the display data that is acquired by adjusting, based on the brightness adjustment requirement, the brightness value of the display picture of the first display device by the first display device is received includes the following operation.

A display data that is acquired by adjusting, based on the brightness adjustment requirement, a gray value of an application page of an application program being displayed on the first display device by the first display device is received.

In this embodiment, the brightness value of the display picture is adjusted by directly adjusting the gray value of the application page of the application program being displayed on the first display device. The change of the brightness of the display picture of the second display device can be visually perceived, and the adjustment operation is simple and feasible.

As another alternative embodiment, the operation that the display data that is acquired by adjusting, based on the brightness adjustment requirement, the brightness value of the display picture of the first display device by the first display device is received includes the following operation.

A display data of the display picture of the first display device after a gray value is adjusted that is acquired by overlaying a mask layer on the display picture of the first display device by the first display device is received. The mask layer is created by the first display device based on the brightness adjustment requirement.

In the present embodiment, by creating the mask layer that can change the display picture of the first display device, the gray value of the display picture of the first display device is adjusted by overlaying the mask layer. Therefore, the gray value of the application interface does not need to be adjusted, that is, the gray value of the application page does not need to be modified from the source of the application program, and it is only needed to adjust the mask layer for different application pages of the application program or different application pages of the same application program, so that the adjustment of the brightness value of the display picture of the first display device is simplified, the user experience is improved, and it can be adapted to all application programs, and the versatility of the device is improved.

As another alternative embodiment, the operation that a brightness adjustment requirement for the second display device is determined includes the following operations.

A touch operation of a preset area on the second display device is detected.

The brightness adjustment requirement for the second display device is determined based on the touch operation.

Herein, the operation that a touch operation of a preset area on the second display device is detected may include detecting various operations on a UI (User Interface) of the second display device. The touch operation may include a sliding operation, a clicking operation, a long pressing operation, and the like. Different touch operations correspond to different adjustment schemes. For example, if the touch operation here is sliding downwards, the indicated brightness adjustment requirement is a brightness dimming requirement. If the touch operation here is sliding upwards, the indicated brightness adjustment requirement is a brightness brightening requirement. Herein, the preset area may be an area displaying the content associated with the display content of the first display device in the second display device. Of course, the preset area may be a preset touch area for receiving the brightness adjustment requirement.

In this embodiment, the brightness adjustment requirement for the second display device is determined according to the touch operation in the preset area, and the brightness adjustment requirement is transmitted to the first display device, so that the brightness value of the display picture of the second display device is adjusted by the first display device.

Further, the present disclosure also provides a specific embodiment to further understand the method for adjusting brightness provided by the embodiments of the present disclosure.

The first display device described below is an example of a mobile terminal, such as a mobile phone. The second display device is an example of a smart television. The first display device and the second display device are in a connected state as described below, taking a mobile terminal being projected onto a smart television as an example.

The projection means that the display image of the projection device is projected to the external device to make the external device display the display image of the projection device synchronously. In the related art, a display image of a device having a small display screen (e.g., a mobile phone, a tablet computer) can be projected onto a display device having a large display screen (e.g., a television, an on-board multimedia display screen) by a projection technology, thereby achieving a better viewing effect and facilitating sharing of the display image with a plurality of people. However, the brightness and the colors displayed on the two display screens usually have a large difference, which brings a poor visual experience to the user. If the display device to be projected is adjusted to adapt to the projection page, the backlight brightness of the display device to be projected needs to be adjusted, which is unfavorable for the user to view other display pictures on the display device to be projected, and damage for the visual acuity of the user may be caused because the other display pictures are not adapted to the display parameters of the current projection picture. Therefore, how to balance the display of the brightness or colors of the projection picture and the non-projection picture on the display device to be projected becomes an urgent problem to be solved.

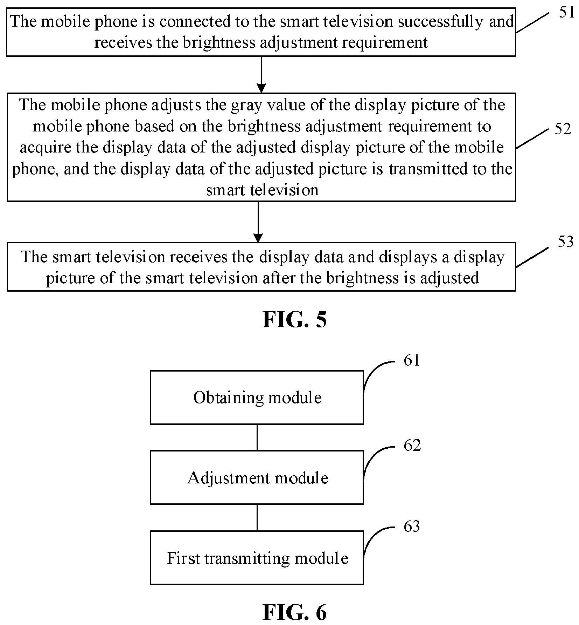

Specifically, referring to FIG. 5, FIG. 5 is a flow chart of a method for adjusting brightness according to an exemplary embodiment. As shown in FIG. 5, the method includes the following operations.

In operation 51, the mobile phone is connected to the smart television successfully and receives the brightness adjustment requirement.

Herein, the brightness adjustment requirement may be triggered by the smart television and transmitted to the mobile phone. It may be initiated directly by the mobile phone in case where the user has watched the content projected onto the smart television.

In operation 52, the mobile phone adjusts the gray value of the display picture of the mobile phone based on the brightness adjustment requirement to acquire the adjusted display data of the display picture of the mobile phone, and the adjusted display data is transmitted to the smart television.

Referring again to FIG. 2, as shown in FIG. 2, the display picture 210 of the first display device is projected onto the display picture 220 of the second display device. The display picture 220 of the second display device may include the first display content 221 and the second display content 222. In the present embodiment, the mobile phone adjusts the gray value of the display picture of the mobile phone based on the brightness adjustment requirement to acquire the adjusted display data of the display picture of the mobile phone.

In operation 53, the smart television receives the display data and displays a display picture of the smart television after the brightness is adjusted.

In this way, the smart television receives the display data, that is, the display data that is projected from the mobile phone onto the smart television. Since the display data has been adjusted on the mobile phone for the brightness value, the brightness is also adjusted for the projection page of the mobile phone displayed on the smart television, and other display pictures of the smart television maintain the original display parameters for display. Therefore, in the present embodiment, only the brightness of the partially projection content is visually changed in the case where the backlight brightness of the smart television is not changed and the brightness value of other display content of the smart television is not changed, so that accurate adjustment of the brightness value of the display content is implemented, and the adjustment operation of the smart television for the brightness is reduced while the user's viewing experience for watching the projection content of the smart television is protected.

FIG. 6 shows an apparatus for adjusting brightness according to an exemplary embodiment. Referring to FIG. 6, the apparatus is applied to a first display device, and the apparatus includes an obtaining module 61, an adjustment module 62, and a first transmitting module 63.

The obtaining module 61 is configured to obtain a brightness adjustment requirement for a second display device in a case of being in a connected state with the second display device.

The adjustment module 62 is configured to adjust, based on the brightness adjustment requirement, a brightness value of a display picture displayed on the second display device to acquire display data of the adjusted display picture of the second display device.

The first transmitting module 63 is configured to transmit the display data of the adjusted display picture to the second display device.

In an alternative embodiment, the display picture of the second display device includes a first display content and a second display content. The first display content is a display content associated with the display content of the first display device, and the second display content is a display content not associated with the display content of the first display device.

The adjustment module 62 is further configured to: in the case where a brightness value of the second display content is maintained, adjust, based on the brightness adjustment requirement, a brightness value of the first display content displayed on the second display device.

In an alternative embodiment, the adjustment module 62 is further configured to: when a display picture of the first display device is projected onto the second display device, adjust a brightness value of the display picture of the first display device based on the brightness adjustment requirement.

In an alternative embodiment, the adjustment module 62 is specifically configured to: adjust, based on the brightness adjustment requirement, the brightness value of the display picture of the first display device by adjusting a gray value of an application page of an application program being displayed on the first display device.

In an alternative embodiment, the adjustment module 62 further comprises a creation sub-module and an overlaying sub-module.

The creation sub-module is configured to create, according to the brightness adjustment requirement, a mask layer that changes the display picture of the first display device.

The overlaying sub-module is configured to overlay the mask layer on the display picture of the first display device to acquire a display picture of the first display device after the gray value is adjusted.

In an alternative embodiment, the creation sub-module is further configured to: create, according to the brightness adjustment requirement, a gray mask layer corresponding to the brightness adjustment requirement; and/or, create, according to the brightness adjustment requirement, a translucent mask layer corresponding to the brightness adjustment requirement.

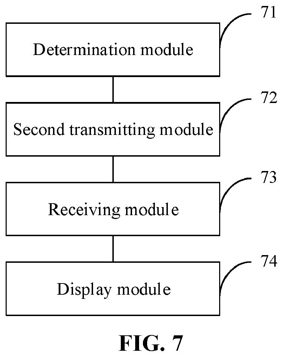

FIG. 7 shows an apparatus for adjusting brightness according to an exemplary embodiment. Referring to FIG. 7, the apparatus is applied to a second display device the apparatus includes a determining module 71, a second transmitting module 72, and a receiving module 73 and display module 74.

The determination module 71 is configured to determine a brightness adjustment requirement for the second display device in a case of being in a connected state with a first display device.

The second transmitting module 72 is configured to transmit the brightness adjustment requirement to the first display device.

The receiving module 73 is configured to receive display data of an adjusted display picture of the second display device that is acquired by adjusting, based on the brightness adjustment requirement, a brightness value of a display picture displayed on the second display device by the first display device.

The display module 74 is configured to display, based on the display data, the display picture after the brightness is adjusted of the second display device.

In an alternative embodiment, the display picture of the second display device includes a first display content and a second display content. The first display content is a display content associated with a display content of the first display device, and the second display content is a display content not associated with the display content of the first display device.

The receiving module 73 is further configured to: in the case where a brightness value of the second display content is maintained, receive a display data that is acquired by adjusting, by the first display device, a brightness value of the first display content of the second display device based on the brightness adjustment requirement.

In an alternative embodiment, the receiving module 73 is specifically configured to: when a display picture of the first display device is projected onto the second display device, receive display data that is acquired by adjusting, by the first display device, the brightness value of the display picture of the first display device based on the brightness adjustment requirement.

In an alternative embodiment, the receiving module 73 is further configured to: receive a display data that is acquired by adjusting, by the first display device, a gray value of an application page of an application program being displayed on the first display device based on the brightness adjustment requirement.

In an alternative embodiment, the receiving module 73 is specifically configured to: receive a display data of the display picture of the first display device after a gray value is adjusted, which is acquired by overlaying a mask layer on the display picture of the first display device by the first display device, wherein the mask layer is created by the first display device based on the brightness adjustment requirement.

In an alternative embodiment, the determination module 71 further comprises a detection sub-module and a determination sub-module.

The detection sub-module is configured to detect a touch operation of a preset area on the second display device

The determination sub-module is configured to determine the brightness adjustment requirement for the second display device based on the touch operation.

With respect to the apparatus in the above embodiments, the specific manner in which the various modules perform operations has been described in detail in the embodiments relating to the method, and will not be described in detail herein.

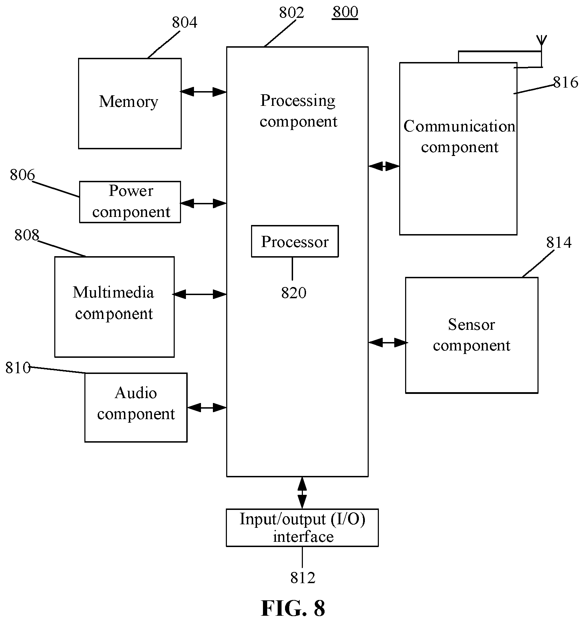

FIG. 8 is a block diagram of a display device 800 according to an exemplary embodiment. For example, the display device 800 may be a mobile phone, a computer, a digital broadcast terminal, a messaging device, a game console, a tablet device, a medical device, an exercise device, a personal digital assistant, or the like.

Referring to FIG. 8, the display device 800 may include one or more of the following component: a processing component 802, a memory 804, a power component 806, a multimedia component 808, an audio component 810, an Input/output (I/O) interface 812, a sensor component 814, and a communication component 816.

The processing component 802 generally controls the overall operation of the display device 800, such as operations associated with displays, telephone calls, data communications, camera operations, and recording operations. Processing component 802 may include one or more processors 820 to execute instructions to perform all or a portion of the steps of the above methods. In addition, the processing component 302 may include one or more modules to facilitate interaction between the processing component 802 and other components. For example, the processing component 802 may include a multimedia module to facilitate interaction between multimedia component 808 and processing component 802.

The memory 804 is configured to store various types of data to support operation at the display device 800. Examples of such data include instructions for any application or method operating on the display device 800, contact data, phone book data, messages, pictures, video, etc. Memory 804 may be implemented by any type of volatile or non-volatile storage device or combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk, or optical disk.

Power component 806 provides power to various components of display device 800. Power component 806 may include a power management system, one or more power supplies, and other components associated with generating, managing, and distributing power for display device 800.

The multimedia component 808 includes a screen providing an output interface between the display device 800 and a user. In some embodiments, the screen may include a liquid crystal display (LCD) and a touch panel (TP). If the screen includes a touch panel, the screen may be implemented as a touch screen to receive input signals from a user. The touch panel includes one or more touch sensors to sense gestures on the touch, slide, and touch panel. The touch sensor may not only sense the boundary of a touch or sliding action, but also detect the duration and pressure associated with the touch or sliding operation. In some embodiments, the multimedia component 808 includes a front-facing camera and/or a rear-facing camera. The front-facing camera and/or the rear-facing camera may receive external multimedia data when the device 800 is in an operating mode, such as a shooting mode or a video mode. Each of the front-facing camera and the rear-facing camera may be a fixed optical lens system or have a focal length and optical zoom capability.

Audio component 810 is configured to output and/or input audio signals. For example, the audio component 810 includes a microphone (MIC). The MIC is configured to receive an external audio signal when the display device 800 is in an operating mode, such as a call mode, a recording mode, and a speech recognition mode. The received audio signal may be further stored in memory 804 or transmitted via communication component 816. In some embodiments, audio component 810 further includes a speaker for outputting an audio signal.

The I/O interface 812 provides an interface between the processing component 802 and a peripheral interface module. The peripheral interface module may be a keyboard, a click wheel, a button, or the like. These buttons may include, but are not limited to, a home page button, a volume button, an activation button, and a lock button.

The sensor component 814 includes one or more sensors for providing a status assessment of various aspects for the display device 800. For example, the sensor component 814 may detect the on/off state of the device 800, the relative positioning of the components, for example, the components are the display and keypad of the display device 800, the sensor component 814 may also detect changes in the position of the display device 800 or one of the components of the display device 800, the presence or absence of user contact with the display device 800, the orientation or acceleration/deceleration of the display device 800, and changes in the temperature of the display device 800. The sensor component 814 may include a proximity sensor configured to detect the presence of a nearby object in the absence of any physical contact. The sensor component 814 may also include a light sensor, such as a CMOS or CCD image sensor, for use in imaging applications. In some embodiments, the sensor component 814 may also include an acceleration sensor, a gyroscope sensor, a magnetic sensor, a pressure sensor, or a temperature sensor.

Communication component 816 is configured to facilitate wired or wireless communication between display device 800 and other devices. The display device 800 may access a wireless network based on a communication standard, such as WiFi, 2G or 3G, or a combination thereof. In one exemplary embodiment, communication component 816 receives broadcast signals or broadcast-related information from an external broadcast management system via a broadcast channel. In one exemplary embodiment, the communication component 816 further includes a near field communication (NFC) module to facilitate short-range communication. For example, the NFC module may be implemented based on Radio Frequency Identification (RFID) technology, Infrared Data Association (IrDA) technology, Ultra Wideband (UWB) technology, Bluetooth (BT) technology, and other technologies.

In an exemplary embodiment, the display device 800 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components for performing the above methods.

In an exemplary embodiment, a non-transitory computer-readable storage medium including instructions is provided, such as a memory 804 including instructions. The instructions are executed by processor 820 of display device 800 to perform the above methods. For example, the non- transitory computer-readable storage medium may be a ROM, a random access memory (RAM), a CD-ROM, a magnetic tape, a floppy disk, an optical data storage device, or the like.

A non-transitory computer-readable storage medium, when the instructions in the storage medium are executed by a processor of a display device, the display device performs the methods described in the above embodiments.

Other embodiments of the invention will readily occur to those skilled in the art upon consideration of the specification and practice of the disclosure disclosed herein. This disclosure is intended to cover any variations, uses, or adaptive of the present disclosure. These variations, uses, or adaptive changes follow the general principles of the present disclosure and include common general knowledge or conventional technical means in the technical field, which are not disclosed in the present disclosure. The specification and the embodiments are considered as being exemplary only. The true scope and spirit of the present disclosure are indicated by the following claims.

It should be understood that the present disclosure is not limited to the exact construction that has been described above and illustrated in the accompanying drawings, and that various modifications and changes may be made without departing from the scope thereof. The scope of the present disclosure is limited only by the appended claims.

## Claims

1. A method for adjusting brightness, performed by a first display device, comprising:
in a case of being in a connected state with a second display device, obtaining a brightness adjustment requirement for the second display device (11);
adjusting, based on the brightness adjustment requirement, a brightness value of a display picture displayed on the second display device to acquire display data of the adjusted display picture of the second display device (12); and
transmitting the display data of the adjusted display picture to the second display device (13).

2. The method of claim 1, wherein the display picture of the second display device comprises a first display content and a second display content, wherein the first display content is a display content associated with a display content of the first display device, and the second display content is a display content not associated with the display content of the first display device;
wherein adjusting, based on the brightness adjustment requirement, the brightness value of the display picture displayed on the second display device comprises:
in a case where a brightness value of the second display content is maintained, adjusting, based on the brightness adjustment requirement, a brightness value of the first display content displayed on the second display device.

3. The method of claim 2, wherein adjusting, based on the brightness adjustment requirement, the brightness value of the first display content displayed on the second display device comprises:
when a display picture of the first display device is projected onto the second display device, adjusting a brightness value of the display picture of the first display device based on the brightness adjustment requirement.

4. The method of claim 3, wherein adjusting the brightness value of the display picture of the first display device based on the brightness adjustment requirement comprises:
adjusting, based on the brightness adjustment requirement, the brightness value of the display picture of the first display device by adjusting a gray value of an application page of an application program being displayed on the first display device.

5. The method of claim 3, wherein adjusting, based on the brightness adjustment requirement, the brightness value of the display picture of the first display device comprises:
creating, according to the brightness adjustment requirement, a mask layer that changes the display picture of the first display device (1211);
overlaying the mask layer on the display picture of the first display device to acquire a display picture of the first display device after the gray value is adjusted (1212).

6. The method of claim 5, wherein creating, according to the brightness adjustment requirement, the mask layer that changes the display picture of the first display device comprises:
creating, according to the brightness adjustment requirement, a gray mask layer corresponding to the brightness adjustment requirement; and/or,
creating, according to the brightness adjustment requirement, a translucent mask layer corresponding to the brightness adjustment requirement.

7. A method for adjusting brightness, performed by a second display device, comprising:
in a case of being in a connected state with a first display device, determining a brightness adjustment requirement for the second display device (41);
transmitting the brightness adjustment requirement to the first display device (42);
receiving display data of an adjusted display picture of the second display device that is acquired by adjusting, by the first display device based on the brightness adjustment requirement, a brightness value of a display picture displayed on the second display device (43);
displaying, based on the display data, the display picture after the brightness is adjusted of the second display device (44).

8. The method of claim 7, wherein the display picture of the second display device comprises a first display content and a second display content, wherein the first display content is a display content associated with a display content of the first display device, and the second display content is a display content not associated with the display content of the first display device;
wherein receiving the display data of the adjusted display picture of the second display device that is acquired by the first display device based on the brightness adjustment requirement comprises:
in the case where a brightness value of the second display content is maintained, receiving display data that is acquired by adjusting, by the first display device, a brightness value of the first display content of the second display device based on the brightness adjustment requirement.

9. The method of claim 8, wherein receiving the display data that is acquired by adjusting the brightness value of the first display content of the second display device by the first display device based on the brightness adjustment requirement comprises:
when a display picture of the first display device is projected onto the second display device, receiving display data that is acquired by adjusting, by the first display device, the brightness value of the display picture of the first display device based on the brightness adjustment requirement.

10. The method of claim 9, wherein receiving the display data that is acquired by adjusting, by the first display device, the brightness value of the display picture of the first display device based on the brightness adjustment requirement comprises:
receiving display data that is acquired by adjusting, by the first display device based on the brightness adjustment requirement, a gray value of an application page of an application program being displayed on the first display device.

11. The method of claim 9, wherein receiving the display data that is acquired by adjusting, based on the brightness adjustment requirement, the brightness value of the display picture of the first display device by the first display device comprises:
receiving display data of the display picture of the first display device after a gray value is adjusted, which is acquired by overlaying a mask layer on the display picture of the first display device by the first display device, wherein the mask layer is created by the first display device based on the brightness adjustment requirement.

12. The method of claim 7, wherein determining the brightness adjustment requirement for the second display device comprises:
detecting a touch operation of a preset area on the second display device;
determining the brightness adjustment requirement for the second display device based on the touch operation.

13. A display device, comprising:
a processor;
a memory for storing instructions executable for the processor;
wherein when the executable instructions are executed, the processor is configured to implement the brightness adjustment method as claimed in any one of claims 1 to 6.

14. A display device, comprising:
a processor;
a memory for storing instructions executable for the processor;
wherein when the executable instructions are executed, the processor is configured to implement the brightness adjustment method as claimed in any one of claims 7 to 12.

15. A non-transitory computer readable storage medium on which a computer program is stored and when instructions in the storage medium are executed by a processor of a display device, the display device performs the brightness adjustment method steps as claimed in any one of claims 1 to 6, or performs the brightness adjustment method as claimed in any one of claims 7 to 12.
